# EUROPÄISCHE PATENTSCHRIFT

(11) **EP 2 114 737 B1**
(45) Veröffentlichungstag und Bekanntmachung des Hinweises auf die Patenterteilung: **10.10.2012**
(21) Anmeldenummer: 07821486.3
(22) Anmeldetag: 18.10.2007
(51) Int. Cl.: B60S 1/34, B60S 1/58, F16J 15/32

(54) **ABDICHTVORRICHTUNG FÜR EINE ANTRIEBSWELLE EINES WISCHERANTRIEBS, SYSTEM ZUM AUFBAU ENTSPRECHENDER ABDICHTVORRICHTUNGEN UND ENTSPRECHENDER WISCHERANTRIEB**
SEALING DEVICE FOR A DRIVE SHAFT OF A WIPER DRIVE, SYSTEM FOR CONSTRUCTING SUCH SEALING DEVICES, AND CORRESPONDING WIPER DRIVE
DISPOSITIF D'ÉTANCHÉITÉ POUR UN ARBRE MENANT D'UNE COMMANDE D'ESSUIE-GLACE, SYSTÈME DE MONTAGE DES DISPOSITIFS D'ÉTANCHÉITÉ CORRESPONDANTS ET COMMANDE D'ESSUIE-GLACE CORRESPONDANTE

(30) Priorität: 15.12.2006 DE 102006059345
(43) Veröffentlichungstag der Anmeldung: 11.11.2009
(73) Patentinhaber: Robert Bosch GmbH, 70442 Stuttgart (DE)
(72) Erfinder: BOHN, Roland, 77815 Buehl (DE)
(86) Internationale Anmeldenummer: PCT/EP2007/061121
(87) Internationale Veröffentlichungsnummer: WO 2008/071491

(56) Entgegenhaltungen:
- EP-A- 1 188 971
- EP-A- 1 394 452
- EP-A- 1 837 256
- WO-A-2007/080008
- DE-A1- 19 918 873
- US-A- 5 634 726

## Beschreibung

Die Erfindung betrifft eine Abdichtvorrichtung für eine Antriebswelle eines Wischerantriebs, mit einer Schutzkappe und mit mindestens einer ringförmigen Dichtung für den abgedichteten Durchtritt der Antriebswelle durch die Schutzkappe und mit einem Einsetzteil, wobei die Dichtung in axialer Richtung von dem in das Innere der Schutzkappe einsetzbaren Einsetzteil abgestützt wird.

Ferner betrifft die Erfindung ein System zum Aufbau von Abdichtvorrichtungen für Antriebswellen von Wischerantrieben, mit Schutzkappen, mit ringförmigen, entsprechend ihrem Dichtungstyp unterschiedlich ausgestalteten Dichtungen und mit Einsetzteilen, wobei je ein Einsetzteil zur Abstützung in axialer Richtung der mindesten einen Dichtung in das Innere der jeweiligen Schutzkappe einsetzbar ist.

### Stand der Technik

Abdichteinrichtungen für Antriebswellen eines Wischerantriebs mit einer Schutzkappe sind zum Beispiel bei Kraftfahrzeugen bekannt siehe z.B. US5634726 A, DE 19918873 A1, WO 200708008 A1, EP 1837256 A1. Insbesondere bei Wischerantrieben für Heckscheibenwischer ist die Antriebswelle am Austritt. Vom Fahrzeuginnenraum zur Karosserie beziehungsweise zur Glasscheibe über eine Schutzkappe abgedichtet. Die Abdichtung der Antriebswelle zur Schutzkappe ist eine dynamische Abdichtung und erfolgt in der Regel mittels einer als O-Ring ausgebildeten Dichtung, die in axialer Richtung von einem in das Innere der Schutzkappe eingesetzten Einsetzteil abgestützt wird. Das Einsetzteil ist zum Beispiel eine eingepresste Stahlscheibe oder ein ultraschallverschweißter Kunststoffring. Bei hohen Anforderungen an die Dichtung ist diese alternativ als Lippendichtring ausgebildet, der mittels einem ebenfalls als eingepresste Stahlscheibe oder als Ultraschallverschweißter Kunststoffring ausgebildetem Einsetzteil axial gehalten wird.

Aufgrund verschiedener Einbausituationen des Wischerantriebs ist die Antriebswelle und somit die Abdichtvorrichtung bei verschiedenen Projekten verschieden lang, was für jede neue Länge eine neue Schutzkappe notwendig macht. Wenn zusätzlich bei Wischerantrieben gleicher Länge der Antriebswelle verschiedene Dichtungen verwendet werden, sind für Dichtvorrichtungen gleicher Länge unterschiedliche Schutzkappen notwendig, da diese zur Dichtungsaufnahme dichtungstypabhängig ausgestaltet sind.

Ferner ist ein entsprechendes System zur Herstellung von Abdichtvorrichtungen für Antriebswellen von Wischerantrieben als Baukasten-System bekannt, das alle notwendigen Komponenten zum Aufbau von Abdichtvorrichtungen mit Dichtungen unterschiedlichen Dichtungstyps aufweist. Dabei sind die Schutzkappen dichtungstypabhängig ausgestaltet, sodass auch für Abdichtvorrichtungen gleicher Schutzkappenlänge verschiedene, dichtungstypabhängige Schutzkappen bereitgehalten werden müssen.

### Offenbarung der Erfindung

Zur Realisierung von Abdichtvorrichtungen mit dichtungstypunabhängigen Schutzkappen ist vorgesehen, dass das Einsetzteil als Dichtungsaufnahmeteil ausgebildet ist. Dadurch, dass die Abdichtvorrichtung ein Dichtungsaufnahmeteil aufweist, benötigt die Schutzkappe keine dichtungstypspezifische Struktur und sind daher einfacher herstellbar. Weiterhin ist eine Verwechslung von Schutzkappen für unterschiedliche Dichtungen damit ausgeschlossen. Dem jeweiligen Dichtungsaufnahmeteil ist eindeutig und ohne Aufwand anzusehen, für welche Dichtung er vorgesehen ist.

Mit Vorteil ist weiterhin vorgesehen, dass das Dichtungsaufnahmeteil einen Dichtungsaufnahmeraum zur Aufnahme der Dichtung ausbildet. Am Dichtungsaufnahmeraum des Dichtungsaufnahmeteils ist eindeutig zu erkennen, für welche Dichtung beziehungsweise welchen Dichtungstyp dieses Dichtungsaufnahmeteil vorgesehen ist.

Weiterhin ist mit Vorteil vorgesehen, dass das Dichtungsaufnahmeteil die Dichtung in seinem Dichtungsaufnahmeraum zur gemeinsamen Montage in der Schutzkappe zumindest teilweise aufnehmen kann. Zur gemeinsamen Montage des Dichtungsaufnahmeteils und der entsprechenden Dichtung in der Schutzkappe wird die Dichtung in den Dichtungsaufnahmeraum des Dichtungsaufnahmeteils eingesetzt und anschließend das Dichtungsaufnahmeteil mit der Dichtung in die Schutzkappe eingesetzt. Das Einsetzen kann dabei zum Beispiel eine das Dichtungsaufnahmeteil und die Dichtung fixierendes Einpressen sein. Alternativ kann das Dichtungsaufnahmeteil in der Schutzkappe verschweißt, insbesondere ultraschallverschweißt werden.

Nach einer Weiterbildung der Erfindung ist vorgesehen, dass das Dichtungsaufnahmeteil mindestens eine Radialstützfläche zur radialen Abstützung der Dichtung und mindestens eine Axialstützfläche zur axialen Abstützung der Dichtung aufweist, wobei die Radialstützfläche und die Axialstützfläche den Dichtungsaufnahmeraum bilden oder mitbilden. Durch die radiale und axiale Abstützung der Dichtung in der Abdichtvorrichtung durch das Dichtungsaufnahmeteil ist diese bei der Montage und dem Betrieb der Abdichtungsvorrichtung positioniert. Die Radialstützfläche zur radialen Abstützung der Dichtung ist im montierten Zustand der Abdichtvorrichtung insbesondere eine radial außerhalb der ringförmigen Dichtung liegende Radialstützfläche.

Mit Vorteil ist vorgesehen, dass die Schutzkappe im Innern zur axialen Gegenabstützung der Dichtung mindestens eine axiale Gegenabstützfläche aufweist. Bei montierter Dichtung und montiertem Dichtungsaufnahmeteil stützt sich die Dichtung an der Axialstützfläche des Dichtungsaufnehmteils auf seiner einen Seite und an der axialen Gegenabstützung der Dichtung auf seiner anderen Seite axial ab. Durch die Axialstützfläche und die axiale Gegenabstützfläche ist die montierte Dichtung axial fixiert.

Insbesondere ist vorgesehen, dass die ringförmige Dichtung ein O-Ring, ein Doppel-O-Ring, ein Quadring oder ein Lippendichtring ist. Diese unterschiedlichen Dichtungen können - je nach Anforderung an selbige - alternativ zur dynamischen Abdichtung der Antriebswelle in der Abdichtvorrichtung verwendet werden.

Erfindungsgemäß ist das System zum Aufbau von Abdichtvorrichtungen mit dichtungstypabhängig ausgebildeten Dichtungsaufnahmeteilen dadurch gekennzeichnet, dass die Schutzkappen alle gleich ausgebildet sind und die Einsetzteile dichtungstypabhängig ausgebildete Dichtungsaufnahmeteile sind. Somit ist die dichtungstypabhängige Ausgestaltung von der Schutzkappe auf das als Dichtungsaufnahmeteil ausgebildete Einsetzteil verlagert. Diese dichtungstypabhängige Ausbildung ist am Dichtungsaufnahmeteil günstiger realisierbar als an der Schutzkappe. Dadurch ist es möglich, trotz Verwendung von Dichtungen unterschiedlichen Dichtungstyps, einheitliche, günstig und einfach herstellbare Schutzkappen zu verwenden. Weiterhin ist die Gefahr einer Verwechslung von Bauteilen bei der Montage verringert, da den dichtungstypabhängig ausgebildeten Dichtungsaufnahmeteilen (im Gegensatz zu dichtungstypabhängigen Schutzkappen) leicht anzusehen ist, für welchen Dichtungstyp diese vorgesehen sind.

Weiterhin ist mit Vorteil vorgesehen, dass die Dichtungsaufnahmeteile eine einheitliche Verbindungskontur zur Verbindung mit jeweils einer der Schutzkappen aufweisen. Die einheitliche Verbindungskontur ermöglicht es, jedes der dichtungstypabhängig ausgebildeten Dichtungsaufnahmeteile in gleicher Weise in die Schutzkappe einzubringen und dort zu fixieren.

Insbesondere ist vorgesehen, dass die Dichtungsaufnahmeteile jeweils einen dichtungstypabhängigen Dichtungsaufnahmeraum ausbilden.

Nach einer Weiterbildung der Erfindung ist vorgesehen, dass die Dichtungsaufnahmeteile die entsprechenden Dichtungen in ihren Dichtungsaufnahmeräumen zur gemeinsamen Montage in den Schutzkappen zumindest teilweise aufnehmen können. Zur Montage eines Dichtungsaufnahmeteils und einer entsprechenden Dichtung in einer Schutzkappe wird zunächst die Dichtung in den Dichtungsaufnahmeraum des entsprechenden Dichtungsaufnahmeteils eingelegt und das Dichtungsaufnahmeteil mit der Dichtung in die Schutzkappe eingebracht und fixiert. Dieses Einbringen und Fixieren kann zum Beispiel durch Einpressen realisiert sein oder durch ein Verschweißen, insbesondere ein Ultraschallverschweißen.

Mit Vorteil ist vorgesehen, dass die Dichtungsaufnahmeteile jeweils mindestens eine Radialstützfläche zur radialen Abstützung der Dichtung und jeweils mit mindestens eine Axialstützfläche zur Axialabstützung der Dichtung aufweisen, wobei die jeweilige Radialstützfläche und die jeweilige Axialstützfläche den jeweiligen Dichtungsaufnahmeraum der Dichtungsaufnahmeteile bilden oder mitbilden.

Weiterhin ist mit Vorteil vorgesehen, dass jede der Schutzkappen im Innern zur axialen Gegenabstützung der jeweiligen Dichtung mindestens eine axiale Gegenabstützfläche aufweist. Da die Schutzkappen gleich ausgebildet sind ist auch die Gegenabstützfläche aller Schutzkappen gleich ausgebildet. Die jeweilige, in der Schutzkappe montierte Dichtung stützt sich einerseits axial am Dichtungsaufnahmeteil, insbesondere der Axialstützfläche des Dichtungsaufnahmeteils, und andererseits an der axialen Gegenabstützfläche der Schutzkappe ab und ist somit axial fixiert.

Nach einer Weiterbildung der Erfindung ist vorgesehen, dass die Dichtungstypen der Dichtungen des Systems ein O-Ringtyp, ein Doppel-O-Ringtyp, ein Quadringtyp und/oder ein Lippendichtringtyp sind.

Die Erfindung betrifft weiterhin einen Wischerantrieb mit einer Antriebswelle und einer vorstehend genannten Abdichtvorrichtung. Die Abdichtvorrichtung ist mit ihrer Schutzkappe zur Abdichtung der Antriebswelle insbesondere an einem Gehäuseteil des Wischerantriebs montierbar oder einstückig mit dem Gehäuseteil verbunden. Das Gehäuseteil ist zum Beispiel ein Teil eines Getriebegehäuse des Wischerantriebs.

### Kurze Beschreibung der Zeichnungen

Die Erfindung wird anhand der Figuren näher erläutert, und zwar zeigen:
- Figur 1: eine montierte Abdichtvorrichtung einer Antriebswelle eines Wischerantriebs,
- Figur 2: eine Schnittdarstellung eines Endes einer Abdichtvorrichtung mit einem O-Ring,
- Figur 3: eine Schnittdarstellung eines Endes einer Abdichtvorrichtung mit einem Doppel-O-Ring und
- Figur 4: eine Schnittdarstellung eines Endes einer Abdichtvorrichtung mit einem Lippendichtring.

### Ausführungsform(en) der Erfindung

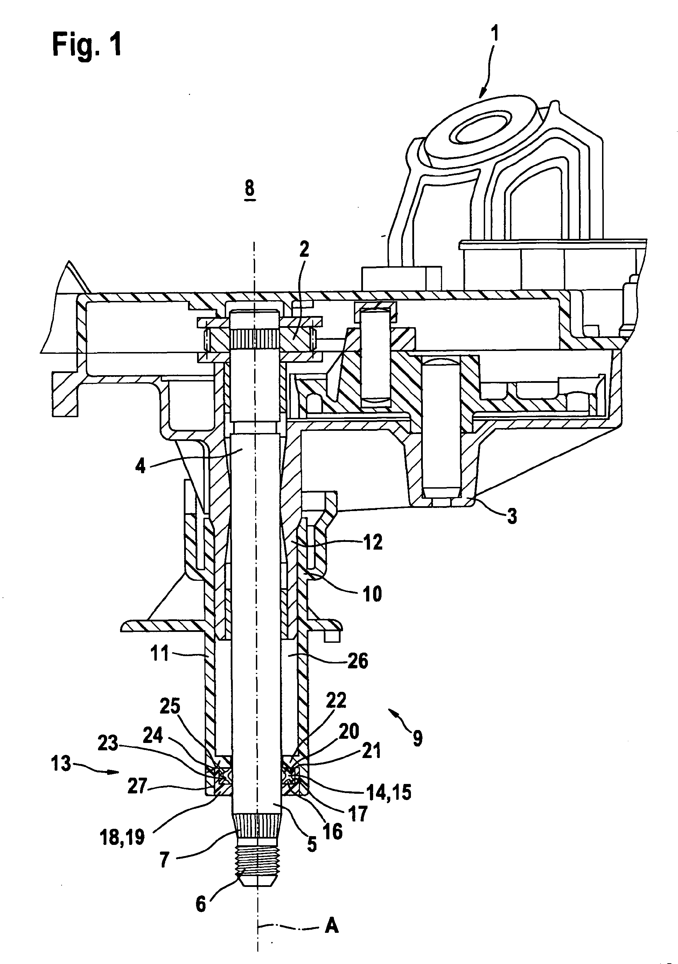

Die Figur 1 zeigt eine Wischerantriebseinheit 1 zum Antrieb eines nicht dargestellten Wischerarms an einer Heckscheibe eines Kraftfahrzeugs. Die Wischerantriebseinheit 1 weist einen nicht dargestellten Elektromotor, ein Getriebe 2, ein das Getriebe 2 umgebenes Getriebegehäuse 3 und eine Antriebswelle 4 zum Antrieb eines nicht dargestellten Wischarms auf. An einem Ende 5 weist die Antriebswelle 4 zur Befestigung des Wischarms einen Befestigungsbereich 6 und einen konisch ausgebildeten Bereich 7 mit einer Rändelung auf, auf den der Wischarm einfach befestigbar ist. Mittels der Antriebswelle 4 treibt die Wischerantriebseinheit 1 den nicht dargestellten Wischarm an, sodass dieser mit einem Wischgummi einen definierten Bereich der Heckscheibe des Fahrzeugs überstreicht.

Die im Fahrzeuginnenraum 8 des Fahrzeugs montierte Wischerantriebseinheit 1 ragt mit seiner Antriebswelle 4 aus dem Fahrzeug heraus. Am Austrittspunkt 9 der Antriebswelle 4 ist diese gegenüber einem nicht dargestellten Karosserieteil beziehungsweise einer nicht dargestellten Glasscheibe des Fahrzeugs durch eine zwischen dem Karosserieteil und der Antriebswelle 4 angeordnete Abdichtvorrichtung 9 abgedichtet. Die Abdichtvorrichtung ist mit einem Aufsteckende 10 ihrer Schutzkappe 11 auf einen Stutzen 12 des Getriebegehäuses 3 aufgesteckt, aus dem die Antriebswelle 4 austritt. Zur Abdichtung der sich im Betrieb der Wischerantriebseinheit 1 bewegenden Antriebswelle 4 gegenüber der ruhenden Abdichtvorrichtung 9 weist die Abdichtungsvorrichtung 9 an einem dem Aufsteckende 10 gegenüberliegenden Dichtungsende 13 eine als Lippendichtring 14 ausgebildete ringförmige Dichtung 15 auf. Die ringförmige Dichtung 15 stütz sich mit ihrer einen Seite 16 an einer Axialstützfläche 17 eines als Dichtungsaufnahmeteil 18 ausgebildeten Einsetzteil 19 und mit ihrer anderen Seite 20 an einer axialen Gegenabstützfläche 21 eines innenumfänglichen Stegs 22 der Schutzkappe 11 ab. Umfänglich wird die ringförmige Dichtung 15 von einer Radialstützfläche 23 des Dichtungsaufnahmeteils 18 umgeben, das am Dichtungsende 13 im Innern 26 der Schutzkappe 11 einliegt. Das Dichtungsaufnahmeteil 18 weist eine Mantelfläche 24 auf, die zusammen mit einer Stirnfläche 25 des Dichtungsaufnahmeteils 18 eine Verbindungskontur 27 zur Verbindung mit der Schutzkappe 11 bildet. Alternativ zu der Befestigung der Schutzkappe 11 am Getriebegehäuse 3 können die Schutzkappe 11 und das Getriebegehäuse 3 insbesondere auch einstückig ausgebildet sein. Diese Ausführungsform der Erfindung ist jedoch nicht dargestellt.

Zur Montage der Abdichtvorrichtung 9 wir die ringförmige Dichtung 15 in einen von der Radialstützfläche 23 und der Axialstützfläche 17 gebildeten Dichtungsaufnahmeraum 28 des Dichtungsaufnahmeteils 18 eingesetzt. Anschließend wird das Dichtungsaufnahmeteil 18 zusammen mit der Dichtung 15 am Dichtungsende 13 in das Innere 26 der Schutzkappe 11 eingeführt, bis sich die andere Seite 20 der ringförmigen Dichtung 15 an der Gegenabstützfläche 21 der Schutzkappe abstützt. Die Verbindung zwischen der Schutzkappe 11 und dem Dichtungsaufnahmeteil 18 erfolgt zum Beispiel dadurch, dass das Dichtungsaufnahmeteil 18 im Dichtungsende 13 der Schutzkappe 11 eingepresst ist oder im Dichtungsende 13 verschweißt wird.

Die Abdichtvorrichtung 9 wird anschließend auf den Stutzen 10 des Getriebegehäuses 3 gesteckt. Zur Abdichtung Antriebswelle 4 der Wischerantriebseinheit 1 gegenüber einem nicht dargestellten Karosserieteil am Austrittpunkt der Antriebswelle 4 aus dem Fahrzeuginnenraum 8 wird die Schutzkappe 11 gegenüber dem Karosserieteil mit einer nicht dargestellten Dichtung abgedichtet.

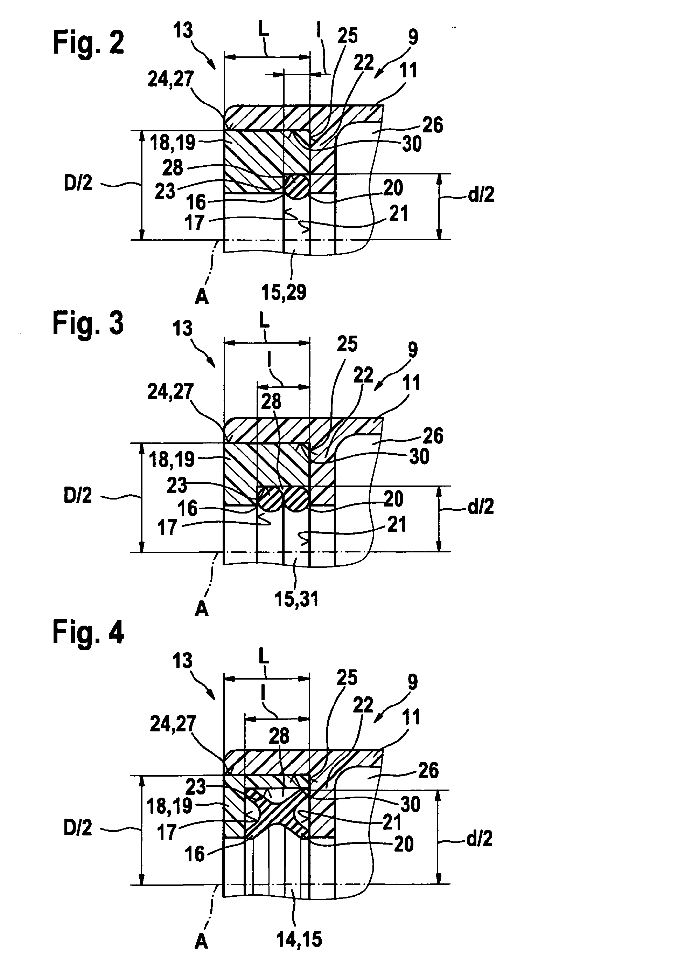

Die Figuren 2 bis 4 zeigen verschiedene Ausführungsformen der erfindungsgemäßen Abdichtvorrichtung 9 als Schnittdarstellung durch das Dichtungsende 13. Aus Symmetriegründen ist die Abdichtvorrichtung 9 jeweils lediglich bis zur Längsmittelachse A dargestellt.

Die Figur 2 zeigt ein Dichtungsende 13 eines ersten Ausführungsbeispiels der erfindungsgemäßen Abdichtvorrichtung 9 mit einer als O-Ring 29 ausgebildeten Dichtung 15. Diese ist zusammen mit dem Dichtungsaufnahmeteil 18 in das Innere der Schutzkappe 11 eingesteckt. Das Dichtungsaufnahmeteil 18 stützt sich mit seiner Mantelfläche 24 an der Innenfläche 30 der Schutzkappe 11 im Bereich des Dichtungsendes 13 ab. Dabei ist das Dichtungsaufnahmeteil 18 und die ringförmige Dichtung 15 soweit in die Schutzkappe 11 eingeschoben, dass sich die Stirnfläche 25 des Dichtungsaufnahmeteils 18 und die andere Seite 20 der in den Dichtungsaufnahmeraum 28 des Dichtungsaufnahmeteils 18 einliegenden Dichtung 15 abstützt. Radial stützt sich die Dichtung 15 an der Radialstützfläche 23 des Dichtungsaufnahmeteils 18 ab.

Die Figur 3 zeigt einen Schnitt durch das Dichtungsende 13 eines zweiten Ausführungsbeispiels der erfindungsgemäßen Abdichtvorrichtung 9 mit einer als Doppel-O-Ring 31 ausgebildeten ringförmigen Dichtung 15. Figur 4 zeigt eine Schnittdarstellung durch ein Dichtungsende 13 einer erfindungsgemäßen Abdichtungsvorrichtung 9 in einem dritten Ausführungsbeispiel. Dabei ist die ringförmige Dichtung 15 als Lippendichtring 14 ausgebildet. Die Abdichtvorrichtung 9 der Figur 4 entspricht der in Figur 1 gezeigten Abdichtvorrichtung. Die in den Figuren 2 bis 4 gezeigten Schutzkappen 11 sind alle gleich ausgebildet. Die entsprechenden Abdichtvorrichtungen 9 unterscheiden sich durch ihre Dichtungen 15, die von unterschiedlichem Dichtungstyp sind. Die Dichtung 15 der Figur 2 ist vom O-Ringtyp, die Dichtung 15 der Figur 3 ist vom Doppel-O-Ringtyp und die Dichtung 15 der Figur 4 ist vom Lippenringtyp. In einem weiteren, nicht dargestellten Ausführungsbeispiel ist die Dichtung 15 ein Quadring. Die jeweiligen Dichtungsaufnahmeteile 18 der Figuren 2, 3 und 4 sind auf die entsprechenden Dichtungen 15 abgestimmte Dichtungsaufnahmeteile 18, die gleich ausgebildete Mantelflächen und unterschiedlich ausgebildete Dichtungsaufnahmeräume 27 aufweisen.

Die jeweilige Mantelfläche 24 jedes der Dichtungsaufnahmeteile 18 weist in Längsrichtung eine immer gleiche Länge L auf und bildet den immer gleichen Durchmesser D der Dichtungsaufnahmeteile 18. Die Axialstützfläche 17 jedes der Dichtungsaufnahmeteile 18 weist in Längsrichtung eine dichtungstypspezifische Länge I des Dichtungsaufnahmeraums 28 auf und bildet den dichtungstypspezifischen Durchmesser d des Dichtungsaufnahmeraums 28 der Dichtungsaufnahmeteile 18.

## Patentansprüche

1. Abdichtvorrichtung (9) für eine Antriebswelle (5) eines Wischerantriebs (1), mit einer Schutzkappe (11) und mit mindestens einer ringförmigen Dichtung (15) für den abgedichteten Durchtritt der Antriebswelle (5) durch die Schutzkappe (11) die Abdichtvorrichtung (9) ein Einsetztei (19) zufweist, wöbei die Dichtung (15) in axialer Richtung von dem in das Innere der Schutzkappe (11) einsetzbaren Einsetzteil (19) abgestützt wird wobei **dadurch gekennzeichnet, dass** das Einsetzteil (19) als Dichtungsaufnahmeteil (18) ausgebildet ist.

2. Abdichtvorrichtung nach Anspruch 1, **dadurch gekennzeichnet, dass** das Dichtungsaufnahmeteil (18) einen Dichtungsaufnahmeraum (28) zur Aufnahme der Dichtung (15) ausbildet.

3. Abdichtvorrichtung nach einem der vorhergehenden Ansprüche, **dadurch gekennzeichnet, dass** das Dichtungsaufnahmeteil (18) die Dichtung (15) in seinem Dichtungsaufnahmeraum (28) zur gemeinsamen Montage in der Schutzkappe zumindest teilweise aufnehmen kann.

4. Abdichtvorrichtung nach einem der vorhergehenden Ansprüche, **dadurch gekennzeichnet, dass** das Dichtungsaufnahmeteil (18) mindestens eine Radialstützfläche (23) zur radialen Abstützung der Dichtung (15) und mindestens eine Axialstützfläche (17) zur axialen Abstützung der Dichtung (15) aufweist, wobei die Radialstützfläche (23) und die Axialstützfläche (17) den Dichtungsaufnahmeraum (28) bilden oder mitbilden.

5. Abdichtvorrichtung nach einem der vorhergehenden Ansprüche, **dadurch gekennzeichnet, dass** die Schutzkappe (11) im Innern (26) zur axialen Gegenabstützung der Dichtung (15) mindestens eine axiale Gegenabstützfläche (21) aufweist.

6. Abdichtvorrichtung nach einem der vorhergehenden Ansprüche, **dadurch gekennzeichnet, dass** die ringförmige Dichtung (15) ein O-Ring (29), ein Doppel-O-Ring (31), ein Quadring oder ein Lippendichtring (14) ist.

7. System zum Aufbau von Abdichtvorrichtungen (9) für Antriebswellen (5) von Wischerantrieber (1), mit Schutzkappe (11), mit ringförmigen, entsprechend ihrem Dichtungstyp unterschiedlich ausgestalteten Dichtungen (15) **dadurch gekennzeichnet, dass** das System Einsetzteilen (19) aufweist, wobei je ein Einsetzteil (19) zur Abstützung in axialer Richtung der mindestens einen Dichtung (15) in jeweilige Schutzkappe (11) einsetzbar ist, das Innere der wobei die Schutzkappen (11) alle gleich ausgebildet sind und die Einsetzteile (19) wobei dichtungstypabhängig ausgebildete Dichtungsaufnahmeteile (18) sind.

8. System nach einem der vorhergehenden Ansprüche, **dadurch gekennzeichnet, dass** die Dichtungsaufnahmeteile (18) eine einheitliche Verbindungskontur (27) zur Verbindung mit jeweils einer der Schutzkappen (11) aufweisen.

9. System nach einem der vorhergehenden Ansprüche, **dadurch gekennzeichnet, dass** die Dichtungsaufnahmeteile (18) jeweils einen dichtungstypabhängigen Dichtungsaufnahmeraum (28) ausbilden.

10. System nach einem der vorhergehenden Ansprüche, **dadurch gekennzeichnet, dass** die Dichtungsaufnahmeteile (18) die entsprechenden Dichtungen (15) in ihren Dichtungsaufnahmeräumen (28) zur gemeinsamen Montage in den Schutzkappen (11) zumindest teilweise aufnehmen können.

11. System nach einem der vorhergehenden Ansprüche, **dadurch gekennzeichnet, dass** die Dichtungsaufnahmeteile (18) jeweils mindestens eine Radialstützfläche (23) zur radialen Abstützung der Dichtung (15) und jeweils mindestens eine Axialstützfläche (17) zur axialen Abstützung der Dichtung (15) aufweisen, wobei die jeweilige Radialstützfläche (23) und die jeweilige Axialstützfläche (17) den jeweiligen Dichtungsaufnahmeraum (28) der Dichtungsaufnahmeteile (18) bilden oder mitbilden.

12. System nach einem der vorhergehenden Ansprüche, **dadurch gekennzeichnet, dass** jede der Schutzkappen (11) im Innern (26) zur axialen Gegenabstützung der jeweiligen Dichtung (15) mindestens eine axiale Gegenabstützfläche (21) aufweist.

13. System nach einem der vorhergehenden Ansprüche, **dadurch gekennzeichnet, dass** die Dichtungstypen der Dichtungen (15) des Systems ein O-Ringtyp, ein Doppel-O-Ringtyp, ein Quadringtyp und/oder ein Lippendichtringtyp sind.

14. Wischerantrieb (1) mit einer Antriebswelle (5) und einer Abdichtvorrichtung (9) nach einem der vorhergehenden Ansprüche.

## Claims

1. Sealing device (9) for a drive shaft (5) of a wiper drive (1), comprising a protective cap (11) and comprising at least one annular seal (15) for the sealed passage of the drive shaft (5) through the protective cap (11), **characterized in that** the sealing device (9) has an insert part (19), wherein the seal (15) is supported in the axial direction by the insert part (19), which can be inserted into the interior of the protective cap (11), wherein the insert part (19) is designed as a seal receiving part (18).

2. Sealing device according to Claim 1, **characterized in that** the seal receiving part (18) forms a seal receiving space (28) for receiving the seal (15).

3. Sealing device according to either of the preceding claims, **characterized in that** the seal receiving part (18) can at least partially receive the seal (15) in its seal receiving space (28) for common mounting in the protective cap.

4. Sealing device according to one of the preceding claims, **characterized in that** the seal receiving part (18) has at least one radial support surface (23) for radially supporting the seal (15) and at least one axial support surface (17) for axially supporting the seal (15), wherein the radial support surface (23) and the axial support surface (17) form or jointly form the seal receiving space (28).

5. Sealing device according to one of the preceding claims, **characterized in that** the protective cap (11) has at least one axial counter-supporting surface (21) in the interior (26) for axially counter-supporting the seal (15).

6. Sealing device according to one of the preceding claims, **characterized in that** the annular seal (15) is an O-ring (29), a double 0-ring (31), a square ring or a lip sealing ring (14).

7. System for constructing sealing devices (9) for drive shafts (5) of wiper drives (1), comprising protective caps (11) and comprising annular seals (15) of different design according to their seal type, **characterized in that** the system has insert parts (19) wherein, in order to provide support in the axial direction of the at least one seal (15), in each case one insert part (19) can be inserted into the interior of the respective protective cap (11), wherein the protective caps (11) all have an identical design and the insert parts (19) are seal receiving parts (18) designed to be dependent on the seal type.

8. System according to one of the preceding claims, **characterized in that** the seal receiving parts (18) have a uniform connecting contour (27) for connecting to in each case one of the protective caps (11).

9. System according to one of the preceding claims, **characterized in that** the seal receiving parts (18) in each case form a seal receiving space (28) which is dependent on the seal type.

10. System according to one of the preceding claims, **characterized in that** the seal receiving parts (18) can at least partially receive the corresponding seals (15) in their seal receiving spaces (28) for common mounting in the protective caps (11).

11. System according to one of the preceding claims, **characterized in that** the seal receiving parts (18) in each case have at least one radial support surface (23) for radially supporting the seal (15) and in each case at least one axial support surface (17) for axially supporting the seal (15), wherein the respective radial support surface (23) and the respective axial support surface (17) form or jointly form the respective seal receiving space (28) of the seal receiving parts (18).

12. System according to one of the preceding claims, **characterized in that** each of the protective caps (11) has at least one axial counter-supporting surface (21) in the interior (26) for axially counter-supporting the respective seal (15).

13. System according to one of the preceding claims, **characterized in that** the seal types of the seals (15) of the system are an O-ring type, a double O-ring type, a square ring type and/or a lip sealing ring type.

14. Wiper drive (1) comprising a drive shaft (5) and a sealing device (9) according to one of the preceding claims.

## Revendications

1. Dispositif d'étanchéité (9) pour un arbre menant (5) d'une commande d'essuie-glace (1), comprenant une coiffe de protection (11) et au moins un joint d'étanchéité annulaire (15) pour le passage étanché de l'arbre menant (5) à travers la coiffe de protection (11), **caractérisé en ce que** le dispositif d'étanchéité (9) présente une pièce d'insertion (19), le joint d'étanchéité (15) étant supporté axialement par la pièce d'insertion (19) pouvant être insérée à l'intérieur de la coiffe de protection (11), la pièce d'insertion (19) étant réalisée sous forme de pièce de réception du joint d'étanchéité (18).

2. Dispositif d'étanchéité selon la revendication 1, **caractérisé en ce que** la pièce de réception du joint d'étanchéité (18) constitue un espace de réception du joint d'étanchéité (28) pour recevoir le joint d'étanchéité (15).

3. Dispositif d'étanchéité selon l'une quelconque des revendications précédentes, **caractérisé en ce que** la pièce de réception du joint d'étanchéité (18) peut recevoir au moins en partie le joint d'étanchéité (15) dans son espace de réception du joint d'étanchéité (28) en vue du montage commun dans la coiffe de protection.

4. Dispositif d'étanchéité selon l'une quelconque des revendications précédentes, **caractérisé en ce que** la pièce de réception du joint d'étanchéité (18) présente au moins une surface d'appui radial (23) pour l'appui radial du joint d'étanchéité (15) et au moins une surface d'appui axial (17) pour l'appui axial du joint d'étanchéité (15), la surface d'appui radial (23) et la surface d'appui axial (17) formant ou formant ensemble l'espace de réception du joint d'étanchéité (28).

5. Dispositif d'étanchéité selon l'une quelconque des revendications précédentes, **caractérisé en ce que** la coiffe de protection (11) présente à l'intérieur (26) pour l'appui conjugué axial du joint d'étanchéité (15) au moins une surface d'appui axial conjuguée (21).

6. Dispositif d'étanchéité selon l'une quelconque des revendications précédentes, **caractérisé en ce que** le joint d'étanchéité annulaire (15) est un joint torique (29), un double joint torique (31), une bague carrée ou une bague d'étanchéité à lèvre (14).

7. Système de construction de dispositifs d'étanchéité (9) pour arbres menants (5) de commandes d'essuie-glaces (1), comprenant des coiffes de protection (11) avec des joints d'étanchéité annulaires (15), réalisés différemment selon leur type d'étanchéité, **caractérisé en ce que** le système présente des pièces d'insertion (19), chaque pièce d'insertion (19) pouvant être insérée pour l'appui dans la direction axiale de l'au moins un joint d'étanchéité (15) à l'intérieur de chaque coiffe de protection (11), les coiffes de protection (11) étant toutes réalisées de manière identique et les pièces d'insertion (19) étant des pièces de réception de joints d'étanchéité (18) réalisées en fonction du type de joint d'étanchéité.

8. Système selon l'une quelconque des revendications précédentes, **caractérisé en ce que** les pièces de réception de joints d'étanchéité (18) présentent un contour de liaison unitaire (27) pour la connexion à l'une respective des coiffes de protection (11).

9. Système selon l'une quelconque des revendications précédentes, **caractérisé en ce que** les pièces de réception de joints d'étanchéité (18) constituent à chaque fois un espace de réception de joint d'étanchéité (28) dépendant du type de joint d'étanchéité.

10. Système selon l'une quelconque des revendications précédentes, **caractérisé en ce que** les pièces de réception de joints d'étanchéité (18) peuvent recevoir au moins en partie les joints d'étanchéité correspondants (15) dans leurs espaces de réception de joints d'étanchéité (28) en vue du montage commun dans les coiffes de protection (11).

11. Système selon l'une quelconque des revendications précédentes, **caractérisé en ce que** les pièces de réception de joints d'étanchéité (18) présentent à chaque fois au moins une surface d'appui radial (23) pour l'appui radial du joint d'étanchéité (15) et à chaque fois au moins une surface d'appui axial (17) pour l'appui axial du joint d'étanchéité (15), la surface d'appui radial (23) respective et la surface d'appui axial (17) respective formant ou formant ensemble l'espace de réception du joint d'étanchéité (28) respectif des pièces de réception de joints d'étanchéité (18).

12. Système selon l'une quelconque des revendications précédentes, **caractérisé en ce que** chacune des coiffes de protection (11) présente à l'intérieur (26) au moins une surface d'appui axial conjuguée (21) pour l'appui axial conjugué du joint d'étanchéité respectif (15).

13. Système selon l'une quelconque des revendications précédentes, **caractérisé en ce que** les types de joint d'étanchéité des joints d'étanchéité (15) du système sont un type de joint torique, un type de double joint torique, un type de bague carrée et/ou un type de bague d'étanchéité à lèvre.

14. Commande d'essuie-glace (1) comprenant un arbre menant (5) et un dispositif d'étanchéité (9) selon l'une quelconque des revendications précédentes.
